# EUROPÄISCHE PATENTSCHRIFT

(11) **EP 1 119 696 B1**
(45) Veröffentlichungstag und Bekanntmachung des Hinweises auf die Patenterteilung: **01.12.2004**
(21) Anmeldenummer: 99970445.5
(22) Anmeldetag: 11.09.1999
(51) Int. Cl.: F02D 35/02, F02D 41/14, F02D 41/22, G01L 23/16

(54) **VORRICHTUNG ZUR ÜBERWACHUNG DES VERBRENNUNGSVORGANGS IN VERBRENNUNGSMOTOREN**
DEVICE FOR MONITORING THE COMBUSTION PROCESS IN INTERNAL COMBUSTION ENGINES
DISPOSITIF POUR SURVEILLER LE PROCESSUS DE COMBUSTION DANS DES MOTEURS A COMBUSTION INTERNE

(30) Priorität: 08.10.1998 DE 19846356
(43) Veröffentlichungstag der Anmeldung: 01.08.2001
(73) Patentinhaber: ROBERT BOSCH GMBH, 70442 Stuttgart (DE)
(72) Erfinder: KUGLIN, Eckart, D-71229 Leonberg (DE); GEISSINGER, Albrecht, D-75147 Mühlacker (DE); LINDEMANN, Gert, D-72805 Lichtenstein (DE); LOCHER, Johannes, Seoul 1064 (KR); DRESSLER, Wolfgang, D-71665 Vaihingen (DE); LINDNER, Friederike, D-70839 Gerlingen (DE); ROTHACKER, Volker, D-74321 Bietigheim-Bissingen (DE); KERN, Christoph, D-71546 Aspach (DE)
(86) Internationale Anmeldenummer: PCT/DE1999/002895
(87) Internationale Veröffentlichungsnummer: WO 2000/022288

(56) Entgegenhaltungen:
- EP-A- 0 280 188
- DE-A- 3 110 996
- DE-A- 4 042 025
- US-A- 4 444 169
- US-A- 4 774 834
- US-A- 4 779 455
- US-A- 4 806 289

## Beschreibung

### Stand der Technik

Bei Verbrennungsmotoren, insbesondere bei Dieselmotoren spielt die Verbrennungsdynamik seit jeher einer große Rolle bei dem Ziel, gute Motorcharakteristiken zu erreichen. Eine möglichst genaue Steuerung des optimalen Zündzeitpunktes sowie eine möglichst exakte Dosierung der Kraftstoffmenge, die durch die Einspritzanlage eingespritzt wird, sind hierbei von Vorteil. Bei neueren Motorentwicklungen sind die Möglichkeiten, steuernd auf die Dynamik der Verbrennung einzugreifen, weiter verbessert worden.

Die Überwachung des Verbrennungsvorgangs findet bislang durch die Kontrolle der Abgaswerte statt. Die vor allem in Verbindung mit geregelten Katalysatoren in Verkehr gekommenen Lavda-Sonden erfassen die Zusammensetzung des Abgases, woraus Rückschlüße über den Verbrennungsvorgang gezogen werden. Auf der Basis dieser Informationen kann regelnd in die Motorsteuerung eingegriffen werden.

Diese Form der Verbrennungsüberwachung hat den Nachteil, daß sie nicht unmittelbar im Verbrennungsraum stattfindet, wodurch sich eine gewisse Verzögerungszeit zwischen dem jeweils stattfindenden Verbrennungsvorgang, dem Erfassen der notwendigen Informationen aus der Abgasanalyse und dem anschließenden regelnden Eingriff in die Motorsteuerung ergibt. Weiterhin hat die Abgasuntersuchung den Nachteil, dass über die Verbrennungsvorgänge, die in unterschiedlichen Brennräumen, d. h. bei herkömmlichen Verbrennungsmotoren in unterschiedlichen Zylindern stattfinden, bei der Abgasanalyse gemittelt wird. Eine differenzierte Betrachtung einzelner Verbrennungsvorgänge, insbesondere auch einzelner Zylinder, ist über die Abgasuntersuchung nach dem Stand der Technik nicht möglich.

Aus der US-A-4444169 ist eine Zündkerze bekannt, bei der parallel zu einer Mittelelektrode ein Lichtleiter aus Quarz in den Bereich der Funkenstrecke der Zündkerze geführt ist, um auf diese Weise den von der Zündkerze gezündeten Verbrennungsvorgang zu beobachten. Mit Hilfe des über den Lichtleiter abgeführten Signals und einem nachgeschalteten Sensors können Rückschlüsse über die Zusammensetzung des dem Brennraum zugeführten Brenngases gezogen werden

Ferner ist aus der US-A-4774834 ein Sensor für eine Brennkraftmaschine bekannt. Dieser Sensor enthält ein strahlungsempfindliches Element, das im Gebrauch durch einen Strahlungsübertragungsweg mit einer Brennkammer einer Brennkraftmaschine mit innerer Verbrennung derart gekoppelt ist, dass ein Signal geliefert wird, wenn in der Brennkammer eine Verbrennung stattfindet.

### Vorteile der Erfindung

Aufgabe der Erfindung ist es, eine Vorrichtung zur Überwachung der Verbrennung vorzuschlagen, die die Überwachung von Verbrennungsvorgängen in einzelnen Brennräumen unter Verwendung eines Bauteils ermöglicht, dessen Aufbau die notwendigen optischen Eigenschaften zur Verfügung stellt. Diese Aufgabe wird durch die Merkmalskombination des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Überwachungsvorrichtung dadurch aus, dass ein Wellenleiter für elektromagnetische Strahlung in ein Bauteil integriert wird, das in einen Brennraum eines Verbrennungsmotors hineinführt. Diese Maßnahme ermöglicht es, die während der Verbrennung entstehende elektromagnetische Strahlung außerhalb des Verbrennungsraumes zu beobachten und entsprechend Informationen für die Dynamik des Verbrennungsvorganges zu gewinnen.

Vorzugsweise wird hierbei die im sichtbaren oder infraroten Bereich auftretende Strahlung analysiert, und der Wellenleiter entsprechend auf diesen Bereich der Wellenlänge angepasst. Da bei der Verbrennung sehr hohe Temperaturen entstehen, befindet sich der Hauptanteil des im Verbrennungsraum durch das heiße komprimierte Gas emittierten Strahlungsspektrums in dem genannten Wellenlängenbereich.

Somit sind in diesem Wellenlängenbereich die größten Intensitäten der emittierten Strahlung vorhanden, die über einen Sensor am Ausgang des Wellenleiters zu erfassen sind. Die Intensität der emitierten Strahlung kann zeitaufgelöst aufgenommen werden, woraus bereits wichtige Rückschlüsse über die Verbrennungsdynamik gezogen werden können. Insbesondere sind hieraus beispielsweise der Zündzeitpunkt sowie die Dauer der Kraftstoffeinspritzung erkennbar. Auch über die Menge des eingespritzten Kraftstoffes läßt sich aufgrund einer solchen Intensitätsverteilung eine Aussage treffen.

In einer Weiterbildung der Erfindung wird ein zur Frequenzanalyse geeigneter Sensor am Ausgang des Wellenleiters angeordnet. Durch Frequenzanalyse des Emissionsspektrums im Innern des Brennraumes läßt sich eine genaue Aussage über die dort herrschende Temperatur treffen. Herkömmliche Pyrometer arbeiten ebenfalls nach diesem Prinzip. Mit Hilfe einer solchen Sensorvorrichtung in Verbindung mit dem erfindungsgemäßen Wellenleiter ist daher der Temperaturverlauf im Innern des Brennraumes zeitlich aufgelöst erfassbar.

Vorzugsweise wird der Wellenleiter in ein ohnehin bei bekannten Motoren vorhandenes, in den Brennraum hineinführendes Bauelement integriert. In Frage kommen hierbei bei Otto-Motoren beispielsweise die Zündkerzen oder bei Dieselmotoren die Glühkerzen.

Vorzugsweise wird das Material des Wellenleiters so gewählt, daß im Wesentlichen der gleiche Wärmeausdehnungskoeffizient wie beim benachbarten Material vorliegt. Da im Innern des Verbrennungsmotors zumindest kurzzeitig sehr hohe Temperaturen, bei Dieselmotoren zwischen 900°C und 1000°C, herrschen können, ist durch die genannte Materialauswahl gewährleistet, daß die an den Materialgrenzen auftretenden Spannungen minimal sind, so daß eine dauerhaft gute Verbindung zwischen Wellenleiter und dem benachbarten Material gewährleistet ist. Eine gute Materialverbindung ist unabdingbar, um die Dichtheit des Bauelementes, beispielsweise der Glühkerze, zu gewährleisten.

In einer Weiterbildung der Erfindung wird das Bauelement aus keramischem Material gefertigt. Vor allem bei Glühkerzen gehen neuere Entwicklungen bereits ohnehin dazu über, einen Aufbau aus keramischen Material zu wählen, da neben einer hohen Temperaturbeständigkeit hiermit auch Glühkerzen mit schneller Reaktionszeit und langer Lebensdauer realisierbar sind.

Die Verwendung von keramischen Materialien ist auch bei der Realisierung eines erfindungsgemäßen Wellenleiters von Vorteil, da viele, als Wellenleiter taugliche Gläser eine ähnliche Wärmeausdehnung aufweisen, so daß die Integration des Wellenleiters in das entsprechende Bauelement vereinfacht wird.

In einer besonderen Ausführungsform der Erfindung wird ein herkömmlicher Lichtleiter in das Material einer Glühkerze eingebettet. Derartige Kabel- oder stabförmige Lichtleiter sind im Handel erhältlich und daher ohne weiters verfügbar. In Frage kommen auch lichtleitende Fasern oder Faserbündel. In allen Fällen wird die wellenleitende Funktion durch die Materialanordnung mit variierendem Brechungsindex gewährleistet, so daß eine Lichtlenkung in Längsrichtung des Wellenleiters erfolgt.

Die Einbettung des Wellenleiters kann bei einer Glühkerze hierbei entweder in eine stromführende Schicht oder aber auch in eine Isolationsschicht vorgenommen werden. Dies wird vorzugsweise anwendungsspezifisch je nach den bei einer jeweiligen Glühkerze vorliegenden Materialien sowie dem Material des Lichtleiters so entschieden, daß die Einbettung aufgrund dieser Materialeigenschaften am problemlosesten möglich ist.

Wie bereits mehrfach erwähnt, herrschen im Innern des Brennraumes hohe Temperaturen. Diesen Temperaturen muß zumindest das in das Innere des Brennraumes hineinragende Ende des Wellenleiters standhalten. Dies kann bei derzeit handelsüblichen Lichtleitern unter Umständen Probleme bereiten. In diesem Fall kann beispielsweise das vordere, d. h. das in den Brennraum ragende Ende des Wellenleiters so angeordnet werden, daß es nicht im Bereich der Spitze der Glühkerze, sondern weiter hinten angeordnet ausmündet. Die Temperaturbelastung der Glühkerze nimmt von der nach innen ragenden Spitze zum hinteren Ende hin ab.

Vorteilhafterweise wird die mit der erfindungsgemäßen Überwachungsvorrichtung gewonnene Information zur aktiven Regelung eines Verbrennungsmotors verwendet. Hierzu wird eine Regelungseinheit zur Regelung verschiedener Motorsteuerparameter vorgesehen. So kann beispielsweise der zündzeitpunkt auf der Basis des am Ausgang des Wellenleiters aufgenommene Sensorsignals vorgenommen werden. Weiterhin kann beispielsweise die Einspritzmenge und/oder auch der zeitliche Verlauf der Einspritzung des Kraftstoffes auf der Basis dieses Sensorsignals gesteuert werden.

Schließlich kann auch eine Steuerung der Luftansauganlage durch die Regelungseinheit auf der Basis eines solchen Sensorsignals stattfinden.

Alle bekannten oder künftigen Steuerparameter zur Beeinflussung der Motorcharakteristik können letztenendes mit Hilfe der erfindungsgemäßen Überwachungsvorrichtung optimal geregelt werden.

Darüber hinaus kann mit der Überwachungsvorrichtung auch die Funktion von Motorkomponenten, beispielsweise der Kraftstoffinjektoren kontrolliert werden. Eine einwandfreie Funktion der Kraftstoffinjektoren ist für die Lebensdauer des Motors von ausschlaggebender Bedeutung. Eine zu lange oder zum falschen Zeitpunkt stattfindende Kraftstoffinjektion kann zu Überhitzung des Motors und somit zu einem Motordefekt führen. Durch die erfindungsgemäße Überwachungsvorrichtung kann somit rechtzeitig eine Fehlfunktion eines Kraftstoffinjektors erkannt und dieser ausgetauscht oder repariert werden.

Grundsätzlich sind alle Kontrollvorgänge mit Hilfe der erfindungsgemäßen Überwachungseinheit denkbar, die aufgrund der verfaßten Information zugänglich sind. Denkbar wäre beispielsweise auch eine Überwachung der Motorkompression aufgrund der erfaßten Innentemperaturen in dem Brennraum.

### Ausführungsbeispiel

Ein Ausführungsbeispiel der Erfindung ist in der Zeichnung dargestellt, und wird anhand der Figuren nachfolgend näher erläutert.

Im Einzelnen zeigen
- Fig. 1: einen schematischen Längsschnitt durch eine Glühkerze mit einer erfindungsgemäßen Überwachungseinheit,
- Fig. 2: eine Hinteransicht einer Glühkerze gemäß Fig. 1,
- Fig. 3: eine weitere Ausführungsform einer erfindungsgemäßen Glühkerze,
- Fig. 4: eine dritte Ausführungsform einer erfindungsgemäßen Glühkerze und
- Fig. 5: eine Ausschnittsvergrößerung des mit V gekennzeichneten Bildausschnitts in Fig. 4

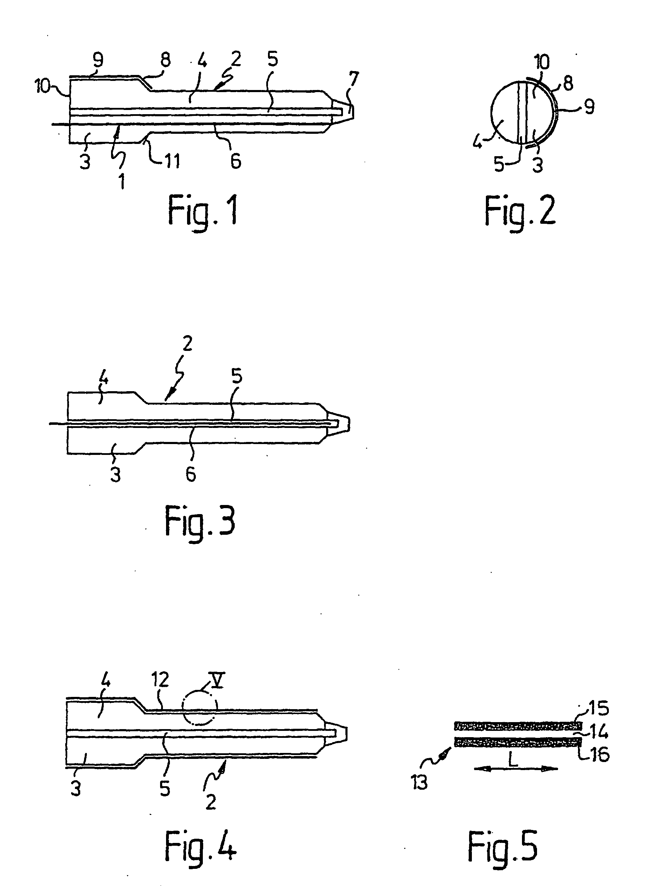

Die Überwachungsvorrichtung 1 gemäß Fig. 1 ist in eine Glühkerze 2 bestehend aus 2 leitenden Schichten 3, 4 sowie einer zwischenliegenden Isolationsschicht 5 integriert. Vorliegend ist ein Lichtleiter 6 in die leitende Schicht 3 eingebettet. Er mündet im Bereich der Glühkerzenspitze 7 aus.

Ein Glühkerzengehäuse 8 ist im hinteren Bereich der Glühkerze 2 angedeutet und ist durch eine Isolationsschicht 9 gegenüber der leitenden Schicht 4 isoliert.

Über zwei Kontaktflächen 10, 11 werden die leitenden Schichten 3, 4 kontaktiert, wobei vorliegend die leitende Schicht 3 über die Kontaktfläche 11 mit der Masse des Motors verbunden wird.

Der Aufbau gemäß Fig. 3 entspricht im Wesentlichen dem vorbeschriebenen Ausführungsbeispiel, wobei nunmehr der Lichtleiter 6 ins Innere der Isolationsschicht 5 eingebettet ist.

Demgegenüber ist in der Ausführungsform gemäß Fig. 4 der Wellenleiter 12 umfangseitig durch einen Schichtaufbau 13 aufgebracht. Dieser Schichtaufbau 13 ist in vergrößerter Darstellung beispielhaft in Fig. 5 dargestellt. Er besteht aus drei Glasschichten 14, 15, 16. Das Glas wird jeweils so gewählt, daß an der Grenzfläche zwischen den äußeren Glasschichten 15, 16 zur inneren Glasschicht 14 eine Totalreflexion stattfindet. Auf diese Weise wird Licht im Inneren der Glasschicht 14 in Bezug auf die Darstellung gemäß Fig. 4 in Linksrichtung zum hinteren Ende der Glühkerze (vgl. Pfeil) geleitet. Der Wellenleiter 11 ist in diesem Ausführungsbeispiel gewissermaßen als Außenrohr um die Glühkerze 2 angeordnet.

### Bezugszeichenliste:

- 1: Überwachungsvorrichtung
- 2: Glühkerze
- 3: leitende Schicht
- 4: leitende Schicht
- 5: Isolationsschicht
- 6: Lichtleiter
- 7: Glühkerzenspitze
- 8: Glühkerzengehäuse
- 9: Isolation
- 10: Kontaktfläche
- 11: Kontaktfläche
- 12: Wellenleiter
- 13: Schichtaufbau
- 14: Glasschicht
- 15: Glasschicht
- 16: Glasschicht

## Patentansprüche

1. Vorrichtung zur Überwachung des Verbrennungsvorgangs in Verbrennungsmotoren, mit einem in einen Brennraum hineinführenden Bauelement, das einen Wellenleiter für elektromagnetische Strahlung aufweist, **dadurch gekennzeichnet, dass** der Wellenleiter (12, 13) durch umfangsseitige Schichtung verschiedener, im sichtbaren und/oder im infraroten Wellenlängenbereich transparenter Schichten (14, 15, 16) mit unterschiedlichem Brechungsindex gebildet ist.

2. Vorrichtung nach Anspruch 1, **dadurch gekennzeichnet, dass** am Ausgang des Wellenleiters (6, 12) ein Sensor zur Erfassung der Intensität der ankommenden Strahlung vorgesehen ist.

3. Vorrichtung nach einem der vorgenannten Ansprüche, **dadurch gekennzeichnet, dass** am Ausgang des Wellenleiters (6, 12) ein zur Frequenzanalyse der ankommenden Strahlung geeigneter Sensor vorgesehen ist.

4. Vorrichtung nach einem der vorgenannten Ansprüche, **dadurch gekennzeichnet, dass** das in den Brennraum hineinführende Bauelement eine Glühkerze (2) oder eine Zündkerze ist.

5. Vorrichtung nach einem der vorgenannten Ansprüche, **dadurch gekennzeichnet, dass** das Material des Wellenleiters (6, 12) einen Wärmeausdehnungskoeffizient aufweist, der an den Wärmeausdehnungskoeffizient des benachbarten Material angepasst ist.

6. Vorrichtung nach einem der vorgenannten Ansprüche, **dadurch gekennzeichnet, dass** das in den Brennraum hineinragende Bauelement (29 keramisches Material umfasst.

7. Vorrichtung nach einem der vorgenannten Ansprüche, **dadurch gekennzeichnet, dass** der Wellenleiter (6, 12) in das Material des in den Brennraum hineinragenden Bauelementes (2) eingebettet ist.

8. Vorrichtung nach einem der vorgenannten Ansprüche, **dadurch gekennzeichnet, dass** der Wellenleiter (6) in eine leitende Schicht (3, 4) und/oder in eine Isolationsschicht (5) einer Glühkerze (2) eingebettet ist.

9. Vorrichtung nach einem der vorgenannten Ansprüche, **dadurch gekennzeichnet, dass** eine Regelungseinheit zur Regelung des Zündzeitpunktes auf der Basis des am Ausgang des Wellenleiters (6, 12) aufgenommenen Sensorsignals versehen ist.

10. Vorrichtung nach einem der vorgenannten Ansprüche, **dadurch gekennzeichnet, dass** eine Regelungseinheit zur Regelung der Einspritzmenge und/oder des zeitlichen Verlaufs der Einspritzung dees Kraftstoffes auf der Basis des am Ausgang des Wellenleiters (6, 12) aufgenommenen Sensorsignals vorgesehen ist.

11. Vorrichtung nach einem der vorgenannten Ansprüche, **dadurch gekennzeichnet, dass** eine Regelungseinheit zur Regelung der Luftansauganlage auf der Basis des am Ausgang des Wellenleiters (6, 12) aufgenommenen Sensorsignals vorgesehen ist.

12. Vorrichtung nach einem der vorgenannten Ansprüche, **dadurch gekennzeichnet, dass** eine Überwachungseinheit zur Überwachung von Motorkomponenten auf der Basis des am Ausgang des Wellenleiters (6, 12) aufgenommenen Sensorsignals vorgesehen ist.

13. Vorrichtung nach einem der vorgenannten Ansprüche, **dadurch gekennzeichnet, dass** die Überwachungseinheit zur Überwachung der Funktion von Kraftstoffinjektoren vorgesehen ist.

## Claims

1. Device for monitoring the combustion process in internal combustion engines, having a component which leads into a combustion chamber and has a waveguide for electromagnetic radiation, **characterized in that** the waveguide (12, 13) is formed by peripheral layering of different layers (14, 15, 16) which are transparent in the visible and/or infra-red wavelength range and have different refractive indices.

2. Device according to Claim 1, **characterized in that** a sensor for sensing the intensity of the incoming radiation is provided at the output of the waveguide (6, 12).

3. Device according to one of the preceding claims, **characterized in that** a sensor which is suitable for frequency analysis of the incoming radiation is provided at the output of the waveguide (6, 12).

4. Device according to one of the preceding claims, **characterized in that** the component which leads into the combustion chamber is a glow plug (2) or a spark plug.

5. Device according to one of the preceding claims, **characterized in that** the material of the waveguide (6, 12) has a coefficient of thermal expansion which is matched to the coefficient of thermal expansion of the adjacent material.

6. Device according to one of the preceding claims, **characterized in that** the component (2) which projects into the combustion chamber comprises ceramic material.

7. Device according to one of the preceding claims, **characterized in that** the waveguide (6, 12) is embedded into the material of the component (2) which projects into the combustion chamber.

8. Device according to one of the preceding claims, **characterized in that** the waveguide (6) is embedded into a conductive layer (3, 4) and/or into an insulating layer (5) of a glow plug (2).

9. Device according to one of the preceding claims, **characterized in that** a regulating unit is provided for controlling the ignition time on the basis of the sensor signal picked up at the output of the waveguide (6, 12).

10. Device according to one of the preceding claims, **characterized in that** a regulating unit is provided for controlling the injection quantity and/or the time profile of the injection of the fuel on the basis of the sensor signal picked up at the output of the waveguide (6, 12).

11. Device according to one of the preceding claims, **characterized in that** a regulating unit is provided for controlling the air intake system on the basis of the sensor signal picked up at the output of the waveguide (6, 12).

12. Device according to one of the preceding claims, **characterized in that** a monitoring unit is provided for monitoring engine components on the basis of the sensor signal picked up at the output of the waveguide (6, 12).

13. Device according to one of the preceding claims, **characterized in that** the monitoring unit is provided for monitoring the function of fuel injectors.

## Revendications

1. Dispositif de surveillance du processus de combustion dans les moteurs à combustion interne, comportant un composant conduisant dans une chambre de combustion et qui comprend un guide d'ondes pour un rayonnement électromagnétique,
**caractérisé en ce que**
le guide d'ondes (12, 13) est formé d'un dépôt en périphérie de diverses couches (14, 15, 16) transparentes dans le domaine spectral visible et/ou infrarouge et possédant des indices de réfraction différents.

2. Dispositif selon la revendication 1,
caractérisé en qu'
à la sortie du guide d'ondes (6, 12), un capteur détermine l'intensité du rayonnement incident.

3. Dispositif selon l'une des revendications précédentes,
**caractérisé en ce qu'**
la sortie du guide d'ondes (6, 12), un capteur approprié analyse la fréquence du rayonnement incident.

4. Dispositif selon l'une des revendications précédentes,
**caractérisé en ce que**
le composant conduisant dans la chambre de combustion est une bougie de préchauffage (2) ou une bougie d'allumage.

5. Dispositif selon l'une des revendications précédentes,
**caractérisé en ce que**
le matériau du guide d'ondes (6, 12) présente un coefficient de dilatation thermique ajusté au coefficient de dilatation thermique du matériau voisin.

6. Dispositif selon l'une des revendications précédentes,
**caractérisé en ce que**
le composant (29) conduisant dans la chambre de combustion comprend un matériau céramique.

7. Dispositif selon l'une des revendications précédentes,
**caractérisé en ce que**
le guide d'ondes (6, 12) est logé dans le matériau du composant (2) conduisant dans la chambre de combustion.

8. Dispositif selon l'une des revendications précédentes,
**caractérisé en ce que**
le guide d'ondes (6) est logé dans une couche conductrice (3, 4)et/ou dans une couche d'isolation (5) d'une bougie de préchauffage (2).

9. Dispositif selon l'une des revendications précédentes,
**caractérisé par**
une unité de réglage pour le réglage de l'instant d'allumage en fonction du signal de capteur reçu à la sortie du guide d'ondes (6,12).

10. Dispositif selon l'une des revendications précédentes,
**caractérisé par**
une unité de réglage pour le réglage de la quantité de carburant injectée et/ou de la variation de l'injection de carburant dans le temps en fonction du signal de capteur reçu à la sortie du guide d'ondes (6,12).

11. Dispositif selon l'une des revendications précédentes,
**caractérisé par**
une unité de réglage pour le réglage de l'installation d'aspiration d'air en fonction du signal de capteur reçu à la sortie du guide d'ondes (6,12).

12. Dispositif selon l'une des revendications précédentes,
**caractérisé par**
une unité de surveillance pour la surveillance des composants du moteur en fonction du signal de capteur reçu à la sortie du guide d'ondes (6,12).

13. Dispositif selon l'une des revendications précédentes,
**caractérisé par**
une unité de surveillance pour la surveillance du fonctionnement des injecteurs de carburant.
